# EUROPÄISCHE PATENTSCHRIFT

(11) **EP 1 224 489 B1**
(45) Veröffentlichungstag und Bekanntmachung des Hinweises auf die Patenterteilung: **10.03.2004**
(21) Anmeldenummer: 00965810.5
(22) Anmeldetag: 02.09.2000
(51) Int. Cl.: G01S 13/90

(54) **HUBSCHRAUBERGETRAGENE RADARANLAGE**
HELICOPTER-BORNE RADAR SYSTEM
INSTALLATION RADAR HELIPORTEE

(30) Priorität: 24.09.1999 DE 19945791
(43) Veröffentlichungstag der Anmeldung: 24.07.2002
(73) Patentinhaber: EADS Deutschland GmbH, 85521 Ottobrunn (DE)
(72) Erfinder: WOLFRAMM, Aribert, D-86899 Landsberg (DE)
(74) Vertreter: Meel, Thomas
(86) Internationale Anmeldenummer: PCT/DE2000/002998
(87) Internationale Veröffentlichungsnummer: WO 2001/023907

(56) Entgegenhaltungen:
- DE-A- 4 328 573
- DE-C- 3 922 086
- US-A- 5 659 318

## Beschreibung

Die Erfindung betrifft eine hubschraubergetragene Radaranlage mit synthetischer Apertur auf Basis rotierender Antennen (ROSAR), wobei die Antennen zum Senden und Empfangen von Radarimpulsen am Ende eines jeden mit dem Rotor rotierenden Armes angeordnet sind und die Antennen mit der Radaranlage verbunden sind und die Radaranlage mindestens eine Sendebaugruppe, eine Elektronikbaugruppe mit zentraler Steuereinrichtung und einen Bildprozessor sowie ein Display hat.

Eine Radaranlage mit synthetischer Apertur (Kurzbezeichnung SAR: **S**ynthetic **A**perture **R**adar) auf Basis rotierender Antennen, kurz ROSAR (ROSAR: **Ro**tor-**SAR**) genannt, eignet sich für einen Hubschrauber als Trägerplattform. Die grundsätzlichen Merkmale zum ROSAR wurden in der DE 39 22 086 C1 beschrieben. Die Drehbewegung der Rotorblätter oder die Drehbewegung eines oberhalb des Rotorkopfes angeordneten und mit dem Rotormast verbundenen Drehkreuzes wird zur Erzeugung der synthetischen Apertur genutzt. Damit unterscheidet sich das ROSAR-Prinzip grundsätzlich gegenüber einem Radar (SAR) mit linearer Antennenbewegung wie bei Flugzeugen üblich.

Das ROSAR überdeckt den gesamten Winkelbereich eines Vollkreises von 360 Grad, dabei wird für einen Sende- und Empfangsvorgang immer eine Sende- und eine EmpfangsAntenne eines rotierenden Armes verwendet. Die zur Abtastung notwendigen Sendeimpulse werden während der Drehbewegung des Armes mit einer vorgegebenen Pulswiederholfrequenz über die Sende-Antenne ausgestrahlt und die Echosignale über die EmpfangsAntenne empfangen. Das betrifft auch die Antennen der anderen rotierenden Arme. Der rotierende Arm kann als Rotorblatt ausgebildet sein, welches am Rotorkopf mit dem rotierenden Rotormast eines Hubschraubers verbunden ist. Andererseits kann der rotierende Arm jedoch auch als Arm eines Drehkreuzes (auch Antennenkreuz genannt) ausgebildet sein, welches oberhalb des Rotormastes positioniert und mit diesem verbunden ist. Das Drehkreuz rotiert mit der Drehzahl des Rotormastes.

Bei der Radaranlage handelt es sich um ein Radar, welches eine kohärente Signalverarbeitung gewährleistet und an Bord des Hubschraubers untergebracht ist. Das ROSAR dient zur Hinderniswarnung als auch zur Abbildung des Erdbodens. Dazu werden die Antennen so angeordnet, daß sie in radiale Richtung schauen und oberhalb und unterhalb des Horizonts ausgerichtet sind. Die Blickrichtung der Radaranlage wird mit der Blickrichtung ihrer Antennen realisiert. Die Blickrichtung einer Sende- und Empfangsantenne ist von der Drehposition des Rotormastes abhängig. Die Blickrichtung ist letztlich jene Richtung auf einem Vollkreis in der Sendeimpulse und Echosignale auf dem Display in einem Bild dargestellt werden.
Die DE 43 28 573 C2 beschreibt eine Weiterentwicklung des ROSAR zu einem Allwettersichtsystem für Hubschrauber. Das mit dem Allwettersichtsystem erzeugte, komplexe Bild gelangt auf einem zugehörigen Cockpit-Display zur Anzeige.

In diesem nächstliegenden Stand der Technik, seiner Weiterentwicklung zum Allwettersichtsystem, ist kein Zusammenhang zwischen der Blickrichtung der Antenne der Radaranlage und den inertialen Achsen eines Hubschraubers als Trägerplattform beschrieben.

Die kreisbogenförmige synthetische Apertur ist als der Weg des Phasenzentrums der Antenne definiert, welcher beim Überstreichen des Azimut-Öffnungswinkels für ein bestimmtes Ziel am Boden zurückgelegt wird.

Da das Antennen-Phasenzentrum nicht für eine gradlinige Bewegung in Flugrichtung, sondern für eine rotatorische Bewegung ausgelegt ist, ist die Blickrichtung des Radar beliebig bezüglich der inertialen Achsen des Hubschraubers. Als inertiale Achsen kommen im wesentlichen die räumlichen Koordinaten-Achsen (X-Achse, Y-Achse, Z-Achse) in Betracht. Die Blickrichtung des Radar liegt somit an einer undefinierten Position eines Vollkreises.

Da auch die Drehzahl des Rotormastes variieren kann, ist es weiterhin nachteilig, daß sich die Anzahl der Radarimpulse pro Umdrehung nicht exakt in Übereinstimmung befindet mit der aktuellen Drehzahl des Rotormastes. Das beeinflußt ebenfalls die Bildgebung nachteilig.

Aufgabe der Erfindung ist es, die Bildgebung auf dem Display der Radaranlage auf eine der inertialen Achsen des Hubschraubers ausrichtbar zu machen und den Einfluß bei Änderung der Rotordrehzahl auf die Bildgebung weiter einzuschränken.

Die Aufgabe wird entsprechend den Merkmalen aus Anspruch 1 gelöst.

Dazu wird am Rotor des Hubschraubers ein Signalgeber angeordnet. Der Signalgeber erzeugt zu Drehpositionen des Rotors Signale, die an eine Elektronikbaugruppe der Radaranlage übermittelt und dort verarbeitbar sind. Diese Elektronikbaugruppe markiert aus der Signalfolge für eine Umdrehung des Rotors die Flanke eines einzelnen Signals. Diese Flanke eines Signals wird als Basisposition definiert und gezählt. Die Basisposition markiert stets den Beginn für eine Rotorumdrehung und mit der Position der Basisposition auf einem Vollkreis ist zugleich die Position einer inertialen Achse des Hubschraubers festgelegt. Die Lage der Basisposition auf einem Vollkreis ist änderbar.

Im weiteren erzeugt die zentrale Steuereinheit aus dem Signal zur Basisposition ein Steuersignal, welches benutzt wird, um in der Senderbaugruppe die dortige Pulsrate mit der Drehrate des Rotors zu synchronisieren.

Ein Signalgeber wird aufgebaut, in dem ein oder mehrere Sender am Rotor und ein oder mehrere gegenüberliegende Empfänger an der Rumpfzelle des Hubschraubers angeordnet sind. Sender und Empfänger können aber auch in umgekehrter Reihenfolge positioniert sein.

Die Sender können als Magnet und die Empfänger als entsprechende Hall-Elemente ausgebildet sein. Eine andere Ausgestaltung wird erreicht, wenn die Sender als optoelektronisch arbeitende Sendebauelemente und die Empfänger als optoelektronisch arbeitende Empfangsbauelemente ausgebildet sind. Eine weitergehende Ausgestaltung wird erreicht, wenn die Sender als Mikrowellensender und die Empfänger als Mikrowellenempfänger ausgebildet sind.

Die Erfindung ermöglicht eine Synchronisation zwischen dem Blickwinkel einer hubschraubertragenden Radaranlage und einer inertialen Achse des Hubschraubers. Die Synchronisation folgt azimutal phasengenau. Dadurch wird es möglich, eine definierte Ausrichtung des Bildes auf dem Bildschirm in bezug auf eine inertiale Achse des Hubschraubers und damit zur Flugrichtung des Hubschraubers zu erreichen. Erst mit dieser Synchronisation ist der Zusammenhang zwischen Bildinhalt und Flugrichtung gegeben. Durch ein elektrisches Stellrad kann die Blickrichtung der Radaranlage (ROSAR) so verstellt werden, daß der Pilot eine gewünschte definierte Blickrichtung des Radarbildes auf dem Bildschirm einstellen kann.
Im Zusammenhang mit dem Signalgeber am Rotor wird es für die Radaranlage weiterhin möglich, die Bildgebung zu verbessern. Dies erfolgt indem die Radarimpulse synchronisiert werden zur Drehzahl des Rotors.

Nachfolgend wird die Erfindung anhand eines Ausführungsbeispiels und entsprechender Zeichnungen erläutert. Es zeigen:
- **Fig. 1**: Prinzip einer hubschraubergetragenen Radaranlage,
- **Fig. 2**: Anordnung eines Signalgebers am Rotor, insbesondere im Bereich Rotormast und Rumpfzelle,
- **Fig. 3**: Impulsdiagramm der Empfänger eines Signalgebers zur Bestimmung einer Basisposition und Ableitung einer Startposition in der Impulsfolge eines Oszillators der Senderbaugruppe.

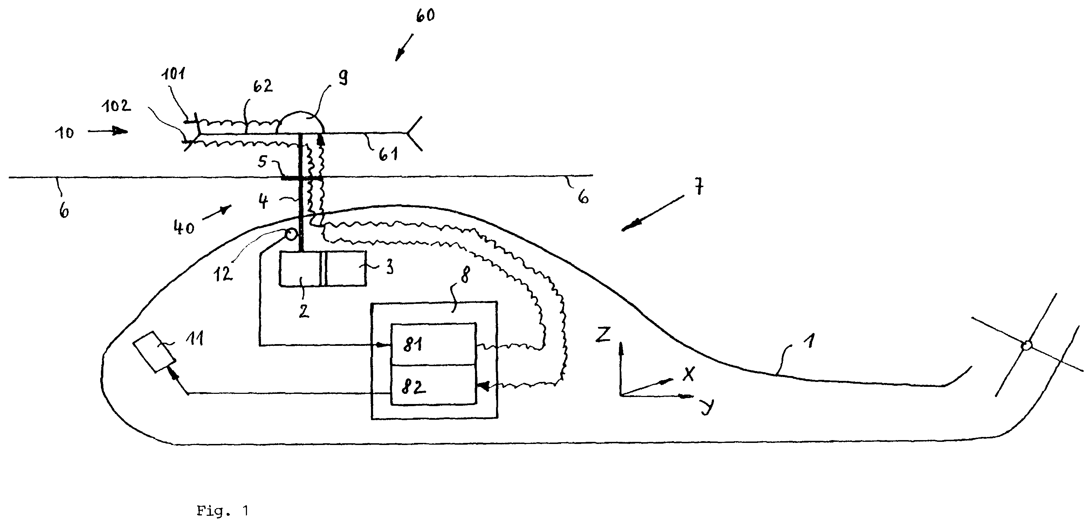

**Fig. 1** zeigt in einer Skizze einen Hubschrauber 1 als tragende Plattform für eine Radaranlage 7 mit synthetischer Apertur auf Basis rotierender Antennen (ROSAR). Zur Erläuterung der erfindungsgemäßen Einrichtung und ihrer Funktionsweise sind nur prinzipielle Baugruppen der Radaranlage 7 dargestellt. Ein Antrieb 3 (z.B. ein Triebwerk) liefert die Antriebsenergie über Getriebe 2 mit Kupplung an den Rotormast 4. Am Rotorkopf 5 des rotierenden Rotormastes 4 sind Rotorblätter 6 befestigt. Ebenfalls am Rotorkopf 5 oberhalb der Rotorblätter 6, ist ein Drehkreuz 60 am Rotorkopf 5 befestigt. Der Antrieb zum Heckrotor ist aus Gründen einer Beschränkung auf wesentliches nicht dargestellt. Das Drehkreuz 60 hat in der Regel vier oder auch mehr, kreuzförmig angeordnete Arme. Im Bild sind die Arme 61 und 62 dargestellt. Die anderen beiden Arme sind in die Bildebene bzw. aus der Bildebene gerichtet. Aus Gründen der Vereinfachung sind nur die beiden Arme 61, 62 dargestellt. Das nachfolgend zu Arm 62 gesagte gilt für alle Arme des Drehkreuzes.

An dem radial äußeren Ende eines Armes 62 ist eine Antennenbaugruppe 10 angeordnet. Die Antennenbaugruppe 10 beinhaltet Sendeantennen 101 und Empfangsantennen 102 für Radarsignale bzw. reflektierte Signale (Echosignale). Die Sendeantennen 101 sind über eine elektrische Verbindung mit einer Sendebaugruppe 9 verbunden. Die Sendebaugruppe 9 ist im Mittelpunkt des Drehkreuzes 60 angeordnet. In einer anders ausgelegten Anordnung kann die zentrale Sendebaugruppe 9 auch in kleine Sendebaugruppen aufgeteilt und in die Antennen als sogenannte aktive Antennen integriert werden. Diese Sendebaugruppe 9 wird von einer zentralen Steuereinheit 81 der Elektronikbaugruppe 8 gesteuert zum Senden von Radarimpulsen. Die Empfangsantennen 102 sind mindestens mit einem Bildprozessor 82 der Elektronikbaugruppe 8 verbunden. Der Bildprozessor 82 steuert ein Display 11 im Cockpit des Hubschraubers. Dieses Display 11 liefert dem Piloten die Bildinformation. Die Elektronikbaugruppe 8 umfaßt die bekannten elektronischen Baugruppen für eine ROSAR-Radaranlage 7. Die Elektronikbaugruppe 8 umfaßt also mindestens eine zentrale Steuereinheit 81 und einen Bildprozessor 82, die miteinander wechselseitig in Verbindung treten können. Die zentrale Steuereinheit 81 besitzt eine Verbindung zur Senderbaugruppe 9.

Am Rotormast 4 ist ein Signalgeber 12 angeordnet. Dieser Signalgeber 12 fühlt die Rotordrehzahl und den "Ausricht-Zustand" des Antennenkreuzes oder der Rotorachse. Der Signalgeber 12 ist mit der zentralen Steuereinheit 81 verbunden.

Die in Fig. 1 dargestellten Verbindungen von und zur Elektronikbaugruppe 8 sind elektrische Leitungen zum Datenaustausch und/oder für Steuersignale.

An den Signalgeber 12 werden extrem hohe Genauigkeitsforderungen (ca. 20 KHz) gestellt. Diese extrem hohen Genauigkeitsforderungen resultieren aus der Tatsache, daß die Radaranlage 7 Radarimpulse mit einer Periodendauer von 5 * 10⁻⁵ Sekunden sendet. Diese Periodendauer ist aus Gründen der erforderlichen Geländeabtastung nahezu konstant, kann jedoch bei anderen Hubschraubertypen einen anderen Wert haben.

Die Bildgebung mittels der Elektronikbaugruppe 8 setzt die empfangenen Echosignale für das Display 11 in ein Bild um, bestehend aus einer Vielzahl von Bildpixeln.

Für den Piloten muß erkennbar sein, welche Blickrichtung die Radaranlage auf dem Display zur Anzeige bringt.

Um dies zu ermöglichen, ist eine Basisposition für eine Umdrehung des Rotormastes zu definieren. Die Basisposition entspricht einer vom Signalgeber erzeugten Signalflanke, ausgewählt aus seiner Signalfolge während einer Rotorumdrehung. Mit Festlegung dieser Basisposition auf einem azimutalen Vollkreis ist zugleich eine inertiale Achse des Hubschraubers festgelegt. Vorteilhafterweise sollte die Basisposition und damit die zu wählende inertiale Achse (X-Achse, Y-Achse, Z-Achse) im wesentlichen in Flugrichtung (Y-Richtung) liegen.

Die Drehungen des Rotors 40 werden von dem Signalgeber 12 gefühlt. Der Begriff des Rotors 40 umfaßt den Rotormast 4, den Rotorkopf 5, die Rotorblätter 6 und das Drehkreuz 60. Damit wird deutlich gemacht, daß zum Fühlen der Rotordrehzahl die genannten Bauteile als Meßort möglich sind. Somit ist der Signalgeber 12 alternativ auch dort installierbar. Dabei wird andererseits deutlich wie schwierig es ist, die Drehungen des Rotors 40 in Übereinstimmung mit den in der Senderbaugruppe 9 erzeugten Radarsignalen (Impulse) zu bringen. Die Radarimpulse haben eine sehr kleine Periodendauer von ca. 5 * 10⁻⁵ Sekunden und werden fortlaufend gesendet, ca. 3016 (abhängig vom Hubschraubertyp) Radarimpulse pro Umdrehung einer Sendeantenne 101 (abhängig vom Hubschraubertyp). Es sind noch weitere Sendeantennen auf dem Drehkreuz verteilt, wobei jede mit Rotordrehzahl rotiert.

Mit Auftreten einer Basisposition bei einer Umdrehung des Rotors 40 ist zugleich eine Startposition in der Impulsfolge der Senderbaugruppe 9 zu definieren. Dies erfolgt durch ein Steuersignal, welches mit Auftreten der Basisposition zu bilden ist. Das Steuersignal veranlaßt die Markierung des zutreffenden (z.B. einer Impulsflanke) als Startposition in der Impulsfolge. Diese Startposition in der Impulsfolge wiederholt sich mit jeder Basisposition der Rotorumdrehung. Diese Gleichzeitigkeit beider Ereignisse d.h. eine Synchronisation ist von der zentralen Steuereinheit 81 gegenüber der Senderbaugruppe 9 zu steuern. Die zentrale Steuereinheit 81 besitzt dazu mindestens einen Zählerbaustein, der die exakten Drehwinkelpositionen des Rotors 40, vorzugsweise des Rotormastes 4 ermittelt und exakt ein Steuersignal zu dem Zeitpunkt liefert, wenn die Basisposition einer Umdrehung erreicht ist. Die in einem Zählerbaustein der zentralen Steuereinrichtung 81 gezählte Basisposition erzeugt das Steuersignal. Dieses Steuersignal der zentralen Steuereinheit 81 veranlaßt gegenüber der Senderbaugruppe 9 phasengenau den Zählbeginn d.h. die Definition einer Startposition in der Impulsfolge der Radarimpulse.

Es ist damit bei konstanter Rotordrehzahl nicht nur bekannt, wie viele Radarimpulse pro Drehung (Pulsrate) im Vollkreis gesendet werden, sondern jede Impulsfolge des Senders 9 für eine Umdrehung des Rotors 40 hat die gleiche Startposition.

Die Startposition ist zugleich auf die gewählte inertiale Achse des Hubschraubers ausgerichtet.

Die Startposition von Radarimpulsen für eine nachfolgende Umdrehung der Antennenbaugruppe 10 im Vollkreis entspricht einer Null-Grad-Position, die sich in Übereinstimmung (Synchronisation) mit einer inertialen Achse, im Azimut liegend, befindet. Das ist im vorliegenden Beispiel vorteilhafter Weise die Y-Achse. Die Null-Grad-Position definiert folglich stets den Beginn für jeden Umlauf des Radar-Blickwinkels (Antennenbaugruppe 10) auf einem Vollkreis. Damit ist ein steter Rückbezug nachfolgender Radarimpulse auf eine Null-Grad-Position möglich.

Die Empfangsantennen 102 nehmen reflektierte Signale (Echosignale) auf und die Elektronikbaugruppe 8 erzeugt auf dem Display das entsprechende Bild. Das Bild wird in der Regel zeilenartig aufgebaut und bei konstanter Rotordrehzahl können die erzeugten Bildinformationen bezüglich der Null-Grad-Position exakt zugeordnet und zu einem Bild zusammengesetzt werden.

Unter Bezug auf die inertiale Achse (z.B. Y-Achse) kann der Pilot sofort die Blickrichtung der Radaranlage 7 erkennen. Es kann auch die Möglichkeit geschaffen werden die Elektronikbaugruppe 8 auf eine andere inertiale Achse (X-Achse) im Azimut umzuschalten, so daß die geänderte Blickrichtung im Bild erkennbar wird.

Die Erfindung bietet auch die Möglichkeit die Bildgebung mittels Elektronikbaugruppe 8 in eine änderbare (variable) Drehzahl des Rotors einzubinden. Eine variable Drehzahl existiert beim Start während des Rotorhochlaufs oder im Flugbetrieb, um eine Lärmreduktion zu erzielen oder bei Flugmanövern oder bei veränderlichen Windverhältnissen. Da bei einer veränderten Drehzahl die Drehrate des Rotors 40 nicht mehr mit der Pulsrate des Senders 9 synchron ist, wird der Bildaufbau gestört. Beispielsweise bei entsprechend erhöhter bzw. reduzierter Rotordrehzahl gegenüber einer Nenndrehzahl wird die Radar-Impulsfolge kleiner bzw. größer als für den Zeilenaufbau im Bild erforderlich. Dies kann korrigiert werden, indem die fehlenden Bildinformationen der aktuellen Impulsrate z.B. durch Null-Werte ersetzt werden bzw. zuviel Bildinformationen unterdrückt werden. Eine andere Möglichkeit wäre eine Anpassung der Pulsrate des Oszillators vom Sender 9 an die Drehrate des Rotormastes 4.

Für die Funktion der Erfindung ist ein geeigneter Signalgeber 12 wichtig. Dieser besteht aus einem oder mehreren Sendern und einem oder mehreren Empfängern. Im Prinzip sind dies ein oder mehrere kleine Sender z.B. auf dem sich drehenden Teil (Drehkreuz 60) des ROSAR und ein oder mehrere kleine gegenüberliegende Empfänger auf dem festen Teil des Hubschrauberrumpfes. Die gleiche Wirkung wird auch erzielt wenn die Anordnung zwischen Sender und Empfänger getauscht ist. Die Ausführung von Sender und Empfänger kann auf verschiedenen physikalischen Prinzipien beruhen z.B. indem Sender und Empfänger auf der Grundlage von Lichtwellen, von Mikrowellen oder Hall-Generatoren kommunizieren.

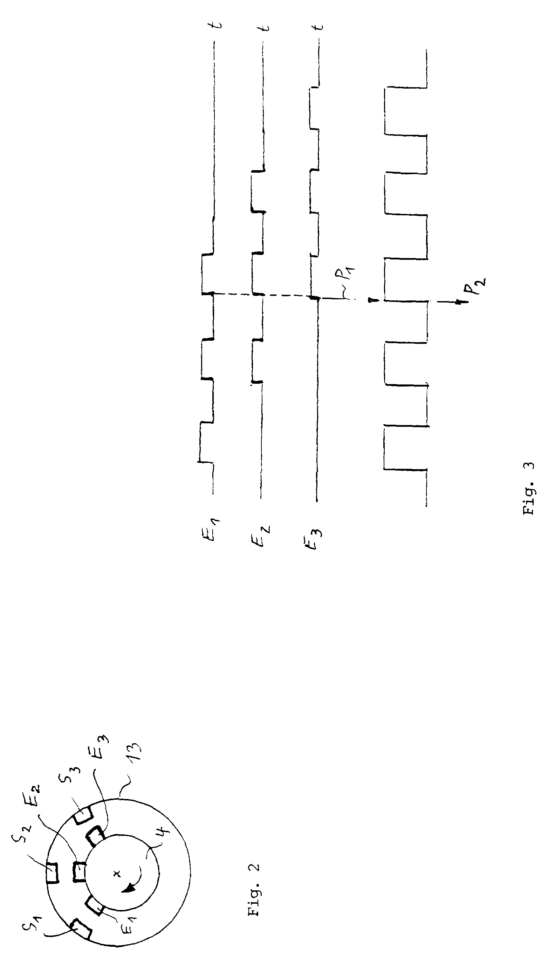

Fig. 2 zeigt schematisch die Anordnung von drei Empfängern am Rotormast 4 und die entsprechende Positionierung von drei Sendern S 1, S2, S3 auf der Hubschrauberzelle 13. Das Bild zeigt schematisch in einer Draufsicht, daß idealerweise der Sender dem Empfänger gegenüberliegend angeordnet sind. Beispielsweise kann der Sender eine Leuchtdiode sein, die permanent ein Licht aussendet, welches auf die Sensorfläche des photoelektrisch arbeitenden Empfängers fokussiert ist.

Bei einer Drehung des Rotormastes 4 in positiver Richtung (s. Pfeil) ist genau eine Umdrehung erreicht, wenn der Empfänger E1 drei Impulse, der Empfänger E2 zwei Impulse und der Empfänger E3 einen Impuls empfangen hat. Wenn genau die Impulsflanken aller drei Empfänger E1, E2, E3 nach dem Impulsdiagramm auftreten, ist eine Basisposition P1 für eine Umdrehung des Rotormastes 4 erreicht (**Fig. 3**).

Diese gezählte Basisposition P1 (in einem Zählerbaustein der zentralen Steuereinheit 81) entspricht in der zentralen Steuereinheit 81 einem Steuersignal. Dieses Steuersignal wird auf die Senderbaugruppe 9 übertragen. Aus der Impulsfolge eines dortigen Oszillators wird zeitgleich mit Auftreten des Steuersignals ein zutreffender, synchroner Radarimpuls als Startposition P2 gewählt. Diese Zählung erfolgt im Sender 9. Damit sind Rotorumdrehung und Impulsfolge des Oszillators synchronisiert.

Die unsymmetrische Anordnung der Sender-Empfänger-Baugruppen zueinander ist beabsichtigt zur Vermeidung von Mehrdeutigkeiten im Impulsdiagramm.

## Patentansprüche

1. Hubschraubergetragene Radaranlage mit synthetischer Apertur auf Basis rotierender Antennen (ROSAR), wobei die Antennen zum Senden und Empfangen von Radarimpulsen am Ende eines jeden mit dem Rotor rotierenden Armes angeordnet sind und die Antennen mit der Radaranlage verbunden sind und die Radaranlage mindestens eine Senderbaugruppe, eine Elektronikbaugruppe mit zentraler Steuereinrichtung und einen Bildprozessor sowie ein Display hat, **dadurch gekennzeichnet, daß** ein Signalgeber (12) am Rotor (40) angeordnet ist, der zu den Drehpositionen des Rotors (40) Signale erzeugt, die an die Elektronikbaugruppe (8) der Radaranlage (7) übermittelt und dort verarbeitbar sind, so daß der Blickwinkel der Antennen (10) mit einer inertialen Achse synchronisierbar ist und die erzeugten Signale an die zentrale Steuereinheit (81) lieferbar sind und die zentrale Steuereinheit (81) Steuersignale bildet, die die Pulsrate der Senderbaugruppe (9) mit der Drehrate des Rotors (40) synchronisiert, um damit die Anzahl der Radarimpulse pro Umdrehung exakt in Übereinstimmung zu bringen mit der aktuellen Drehzahl des Rotors.

2. Einrichtung nach Anspruch 1, **dadurch gekennzeichnet, daß** von den erzeugten Signalen ein Signal eine Basisposition P1 bildet, die stets den Beginn für eine Rotorumdrehung markiert und mit der Position der Basisposition P1 auf einem Vollkreis die Posi-tion einer inertialen Achse festgelegt ist.

3. Einrichtung nach Anspruch 2, **dadurch gekennzeichnet, daß** die Basisposition P1 auf dem Vollkreis änderbar ist.

4. Einrichtung nach einem der vorhergehenden Ansprüche, **dadurch gekennzeichnet, daß** der Signalgeber (12) gebildet ist, indem ein oder mehrere Sender (S 1, S2, S3) am Rotor (40) und ein oder mehrere gegenüberliegende Empfänger (E1, E2, E3) an der Rumpfzelle (13) oder in umgekehrter Reihenfolge angeordnet sind.

5. Einrichtung nach Anspruch 4, **dadurch gekennzeichnet, daß** die Sender (S1, S2, S3) als Magnet und die Empfänger (E1, E2, E3) als Hall-Element ausgebildet sind.

6. Einrichtung nach Anspruch 4, **dadurch gekennzeichnet, daß** die Sender (S1, S2, S3) als optoelektronisch arbeitende Sendebauelemente und die Empfänger (E1, E2, E3) als optoelektronisch arbeitende Empfangsbauelemente ausgebildet sind.

7. Einrichtung nach Anspruch 4, **dadurch gekennzeichnet, daß** die Sender (S1, S2, S3) als Mikrowellensender und die Empfänger (E1, E2, E3) als Mikrowellenempfänger ausgebildet sind.

## Revendications

1. Installation radar héliportée à ouverture synthétique à base d'antennes rotatives (ROSAR), les antennes étant disposées pour l'émission et la réception d'impulsions radar à l'extrémité de chaque bras tournant avec le rotor et les antennes étant reliées à l'installation radar et l'installation radar possédant au moins un module d'émission, un module électronique avec un dispositif de commande central et un processeur d'images ainsi qu'un afficheur, **caractérisée en ce qu'**un capteur de signaux (12) est disposé sur le rotor (40) pour générer des signaux correspondant aux positions en rotation du rotor (40) qui sont transmis vers l'unité électronique (8) de l'installation radar (7) et qui y sont traités de telle sorte que l'angle de vue des antennes (10) peut être synchronisé avec un axe inertiel et que les signaux générés peuvent être délivrés à l'unité de commande centrale (81) et que l'unité de commande centrale (81) forme des signaux de commande qui synchronisent la fréquence des impulsions du module d'émission (9) avec la fréquence de rotation du rotor (40) pour amener ainsi le nombre d'impulsions radar par rotation en coïncidence exacte avec le nombre de tours courant du rotor.

2. Dispositif selon la revendication 1, **caractérisé en ce qu'**un signal issu des signaux générés forme une position de base P1 qui marque en permanence le début d'une rotation du rotor et que la position d'un axe inertiel est déterminée par la position de la position de base P1 sur un cercle complet.

3. Dispositif selon la revendication 2, **caractérisé en ce que** la position de base P1 peut être modifiée sur le cercle complet.

4. Dispositif selon une des revendications précédentes, **caractérisé en ce que** le capteur de signaux (12) est constitué en disposant un ou plusieurs émetteurs (S1, S2, S3) sur le rotor (40) et un ou plusieurs récepteurs (E1, E2, E3) situés en face sur la cellule du fuselage (13) ou en chronologie inverse.

5. Dispositif selon la revendication 4, **caractérisé en ce que** les émetteurs (S1, S2, S3) sont formés d'aimants et les récepteurs (E1, E2, E3) de cellules de Hall.

6. Dispositif selon la revendication 4, **caractérisé en ce que** les émetteurs (S1, S2, S3) sont formés de composants d'émission optoélectroniques et les récepteurs (E1, E2, E3) de composants de réception optoélectroniques.

7. Dispositif selon la revendication 4, **caractérisé en ce que** les émetteurs (S1, S2, S3) sont formés d'émetteurs de micro-ondes et les récepteurs (E1, E2, E3) de récepteurs de micro-ondes.

## Claims

1. Helicopter-borne radar system with a synthetic aperture based on rotating antennas (ROSAR), with the antennas transmitting and receiving radar pulses being arranged at the end of in each case one arm which rotates with the rotor, and the antennas being connected to the radar system, and the radar system having at least one transmitter assembly, an electronics assembly with a central control device, an image processor and a display, **characterized in that** a signal transmitter (12) is arranged on the rotor (40) and produces signals relating to the rotation positions of the rotor (40), which signals are transmitted to the electronics assembly (8) of the radar system (7) where they can be processed such that the viewing angle of the antennas (10) can be synchronised to an inertial axis, and the signals which are produced can be supplied to the central control unit (81), and the central control unit (81) forms control signals and synchronises the pulse repetition rate of the transmitter assembly (9) to the rotation rate of the rotor (40), in order in this way to exactly match the number of radar pulses per revolution to the current rotation speed of the rotor.

2. Device according to Claim 1, **characterized in that**, of the signals which are produced, one signal forms a base position P1 which always marks the start of a rotor revolution, and the position of an inertial axis on a complete circle is defined using the position of the base position P1.

3. Device according to Claim 2, **characterized in that** the base position P1 can be varied on the complete circuit.

4. Device according to one of the preceding claims, **characterized in that** the signal transmitter (12) is formed **in that** one or more transmitters (S1, S2, S3) are arranged on the rotor (40), and one or more opposite receivers (E1, E2, E3) are arranged on the fuselage compartment (13), or in the opposite sequence.

5. Device according to Claim 4, **characterized in that** the transmitters (S1, S2, S3) are in the form of a magnet, and the receivers (E1, E2, E3) are in the form of a Hall element.

6. Device according to Claim 4, **characterized in that** the transmitters (S1, S2, S3) are in the form of optoelectronically operating transmission components, and the receivers (E1, E2, E3) are in the form of optoelectronically operating receiving components.

7. Device according to Claim 4, **characterized in that** the transmitters (S1, S2, S3) are in the form of microwave transmitters, and the receivers (E1, E2, E3) are in the form of microwave receivers.
